# EUROPEAN PATENT APPLICATION

(11) **EP 1 096 401 A2**
(43) Date of publication of application: **02.05.2001**
(21) Application number: 00117531.4
(22) Date of filing: 14.08.2000
(51) Int. Cl.: G06F 17/60

(54) **Electronic transaction system and electronic transaction method**

(30) Priority: 25.10.1999 JP 30182599
(71) Applicant: The Industrial Bank of Japan, Limited, Tokyo 100-8210 (JP)
(72) Inventor: Iwasaki, Hiroshi, c/o The Industrial Bank of Japan, Tokyo 100-8210 (JP)
(74) Representative: Tiedtke, Harro, Dipl.-Ing.

(57) **Abstract**

The purpose of the invention is to provide an electronic transaction system that can easily manage history information of transactions.

The electronic transaction system and the electronic transaction method of this invention comprises (1) a means to generate transaction information concerning a transaction by using a format which consists of text files wherein each information category can be identified by using a corresponding tag which is composed of an arbitral character string blanketed by specific symbols used as delimiters, (2) database 20 to record said transaction information and (3) workflow engine 21 to update the transaction information that is stored in said database, in accordance with the progress of the transaction.

## Description

### BACKGROUND OF THE INVENTION

This invention is related to an electronic transaction system and an electronic transaction method, especially related to an electronic transaction system and an electronic transaction method that enable easy management of transaction history information.

### DESCRIPTION OF THE PRIOR ART

In conventional commercial transactions such as the import of car body components, all transaction information such as a purchase order, an order acknowledgement and an invoice, are handled as paper documents. Since such documents are usually filed according to each classified transaction items, it is necessary to retrieve and to collate different files by sight, using information such as the transaction date, the company's name, the commodity's name and the quantity, in order to seek the past information records of one specific transaction.

### SUMMARY OF THE INVENTION

As explained above, it is extremely difficult for conventional transaction systems to retrieve past records of one specific transaction, since the management of transaction information is carried out by using paper documents. Additionally, conventional systems require much human work to check whether there is loss or revision of a document or not.

The purpose of this invention is to solve such problems of conventional transaction systems, and to provide an electronic transaction system and an electronic transaction method that can easily manage history information of transactions.

The electronic transaction system of this invention that handles transaction information electronically is characterized as it contains (1) a generating means to generate transaction information concerning a transaction by using a format which consists of text files wherein each information category can be identified by using a corresponding tag which is composed of an arbitral character string blanketed by specific symbols used as delimiters, (2) a recording means to record said transaction information and (3) an updating means to update the transaction information that is stored in said recording means in accordance with the progress of the transaction.

Since new transaction information can be additionally recorded in the text file sequentially as the transaction proceeds in this invention, easy recording and retrieving of transaction history information can be realized. Moreover, as this invention only uses text-base files using tags, there are no needs to use any dedicated database systems, so that easy contents retrieval and perusal using conventional general-purpose software such as a word processor or a text editor becomes possible.

### DESCRIPTION OF DRAWINGS

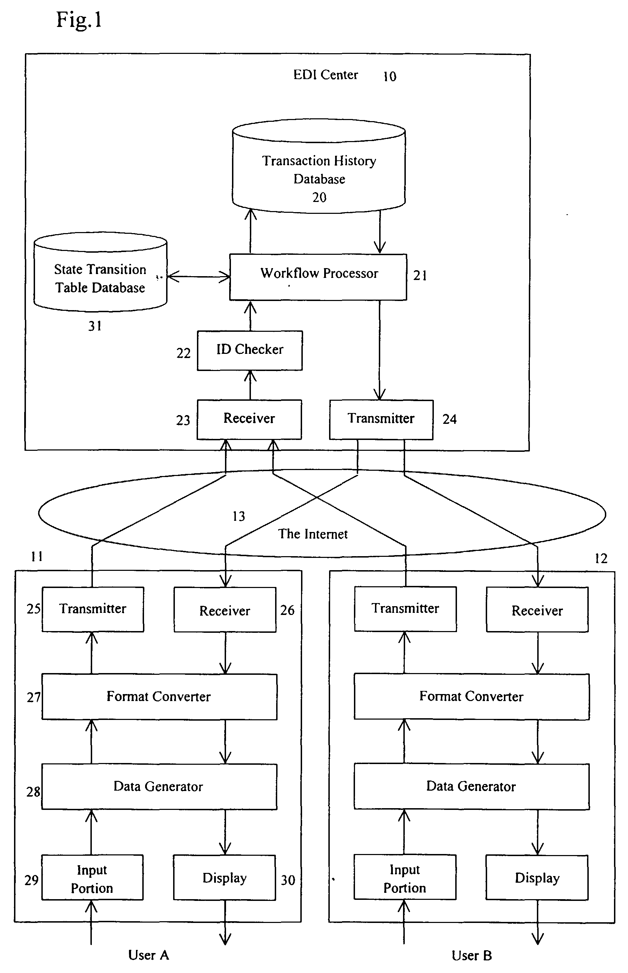

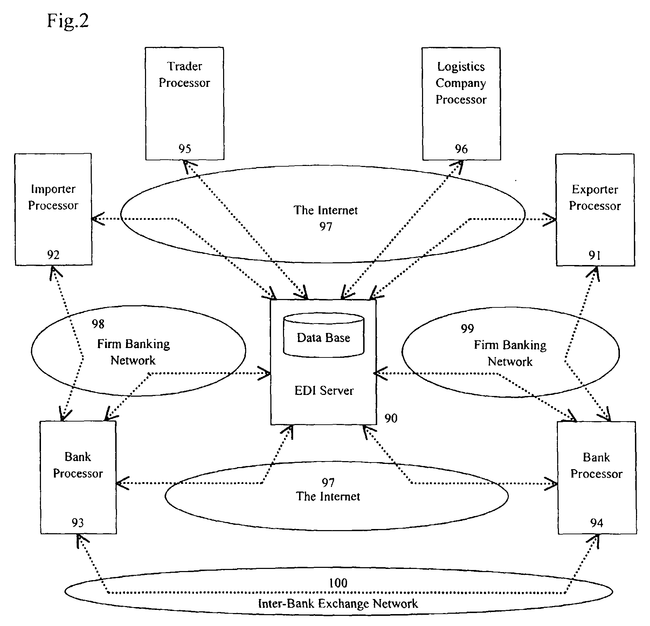

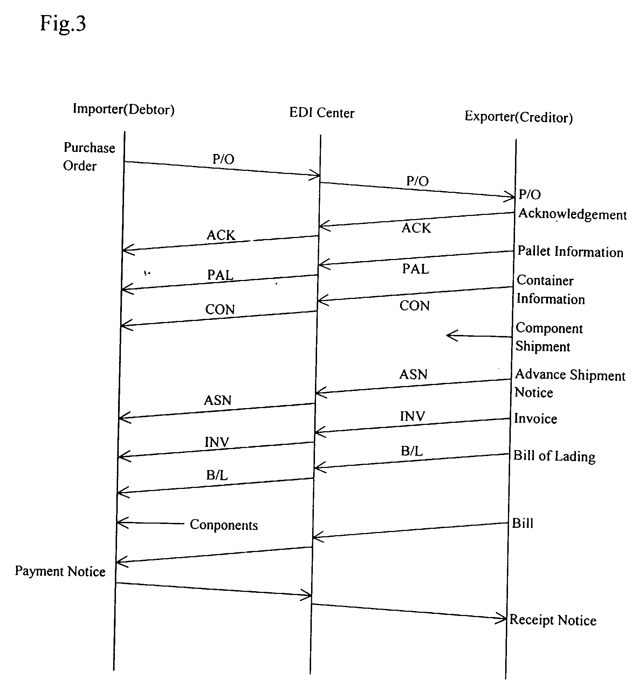

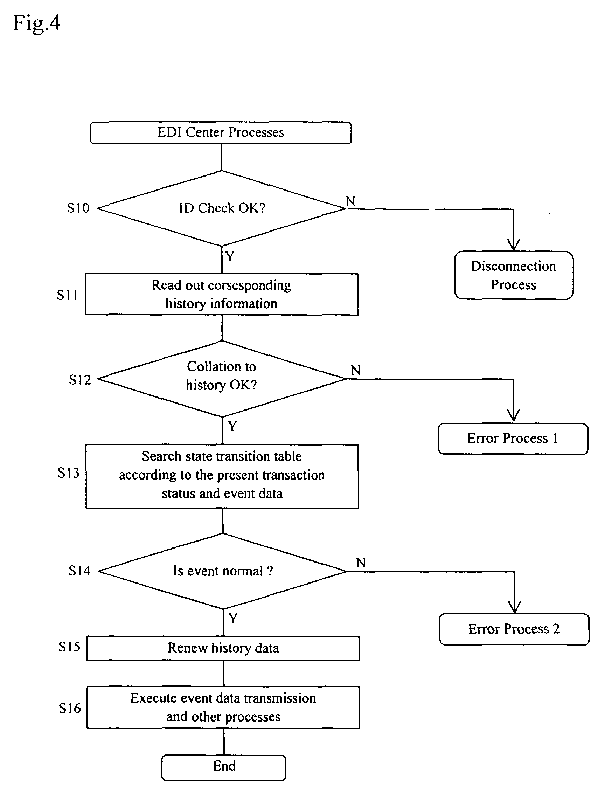

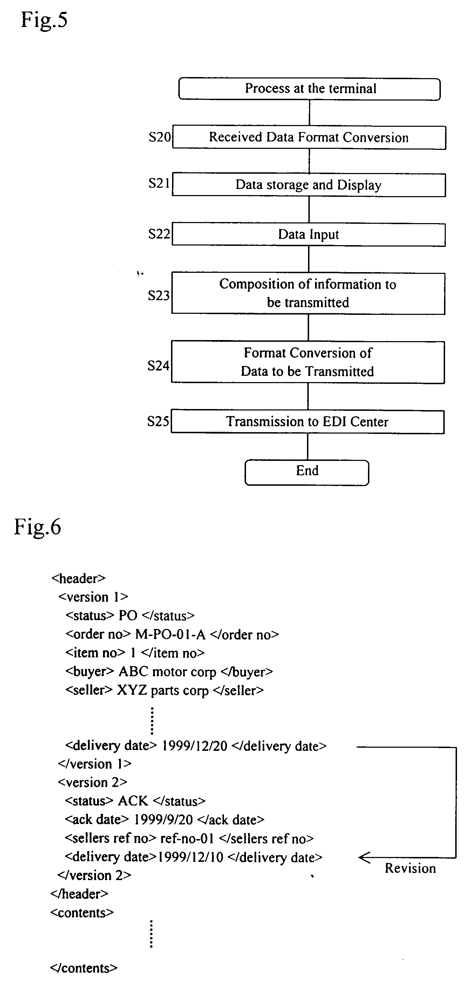

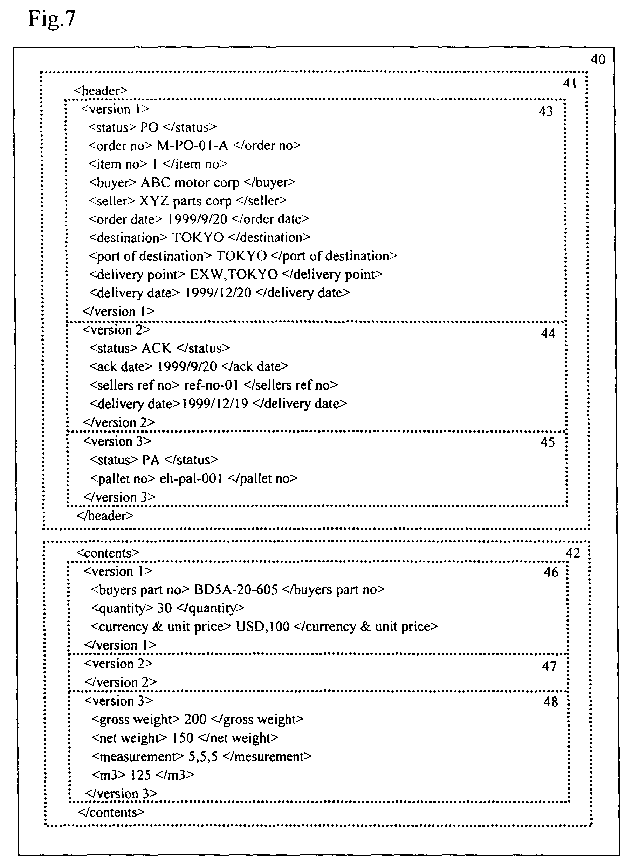

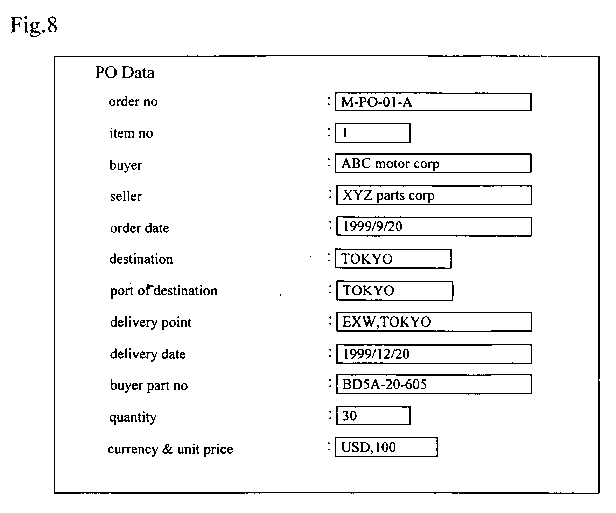

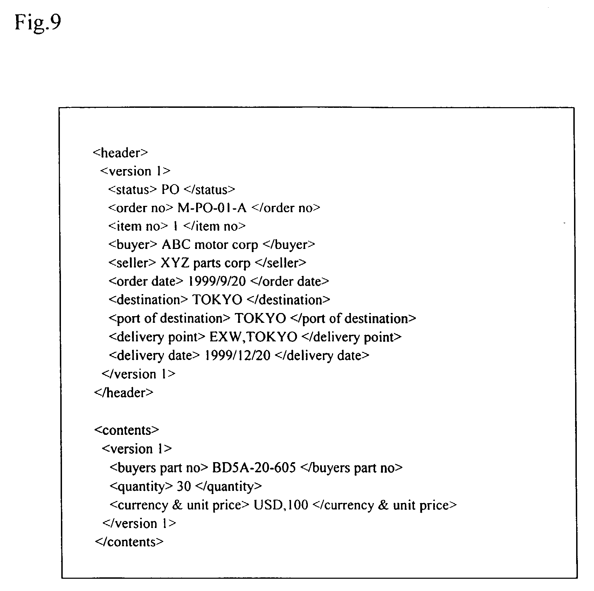

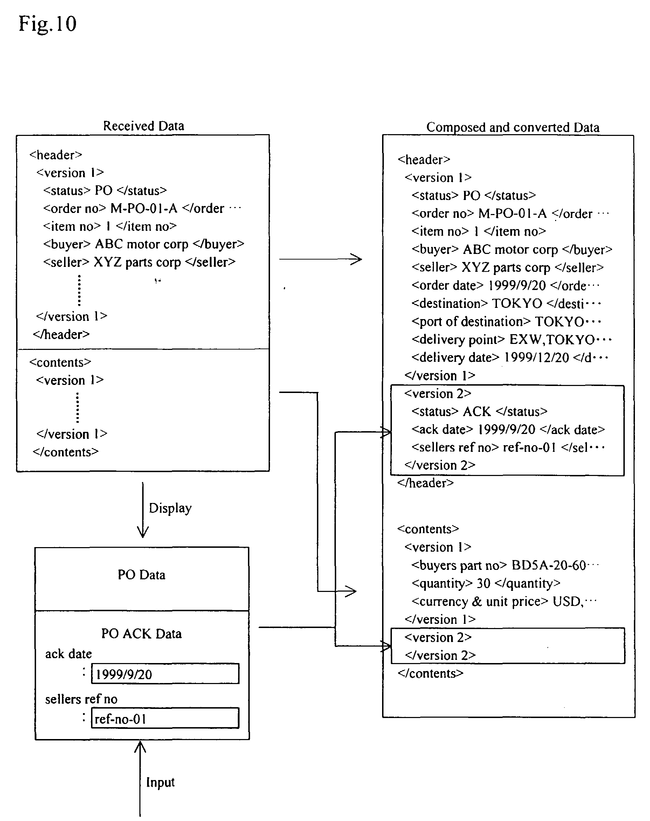

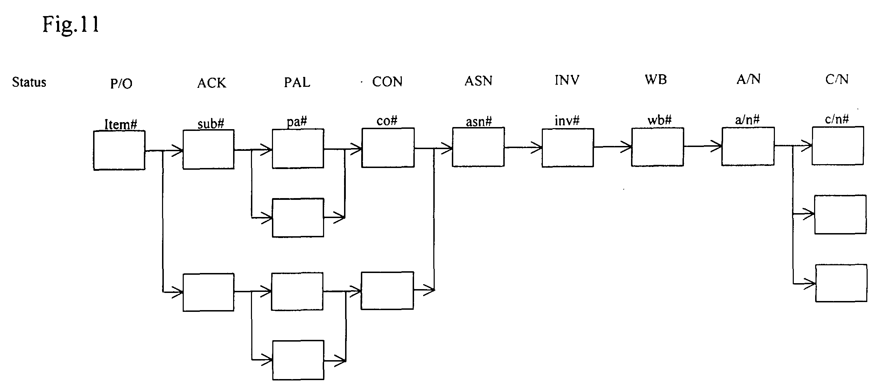

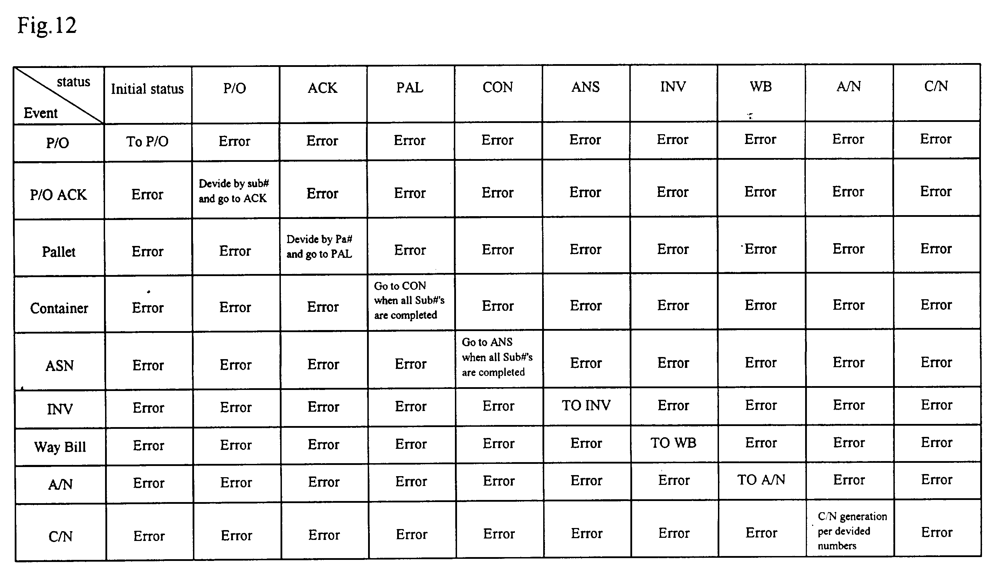

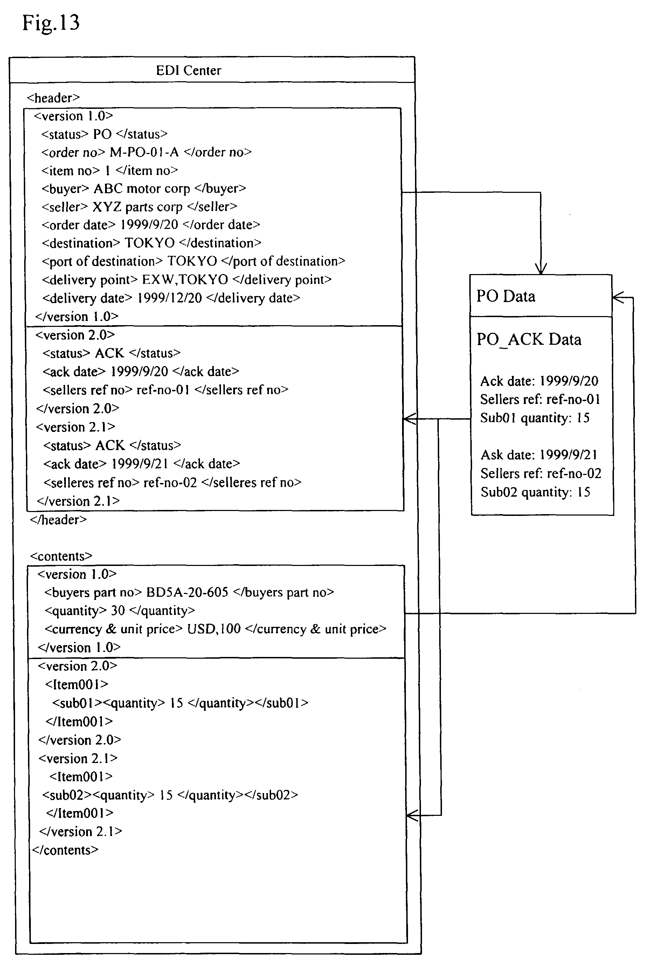

**Figure 1** is a block diagram to show functions of EDI center 10 and user side processors 11 and 12 of the invention. **Figure 2** is a block diagram to show the hardware configuration of the electronic transaction system of the invention. **Figure 3** shows transaction data exchange sequence in the electronic transaction system of the invention. **Figure 4** depicts a flow chart to show the process contents at EDI center 10 of the invention. **Figure 5** is a flow chart explaining the process contents at the user side processor in the invention. **Figure 6** shows an example of changing the transaction data contents in the invention. **Figure 7** is an example of transaction data contents, which are transmitted or stored in the invention. **Figure 8** is to show an example of display and input for a purchase order data that is generated at the initial step of a transaction. **Figure 9** is to explain an example of a purchase order data after the format conversion. **Figure 10** explains an example of composing a purchase order acknowledgement data based on the purchase order data that is received at the seller side terminal processor. **Figure 11** is an example of status transitions at the transaction. **Figure 12** shows an example of the status transition table that is used at the workflow processing. **Figure 13** shows an example of process division for the transaction.

### DESCRIPTION OF THE PREFERRED EMBODIMENT

The embodiment of this invention is explained in detail in the following by using drawings. Figure 2 is a block diagram to show the hardware configuration of the electronic transaction system of this invention. EDI server 90 which is the main body of the EDI (Electronic Data Interchange) center where electronic transactions are carried out is configured so that it can be connected to exporter (creditor) processor 91, importer (debtor) processor 92, trader processor 95 and logistics company processor 96 through the Internet that is depicted as 97.

Exporter processor 91 and EDI server 90 are connected to bank processor 94, which is the processor at the exporter's bank, through conventional firm banking network 99. Also, importer processor 92 and EDI server 90 are connected to bank processor 93, which is the processor at the importer's bank, through conventional firm banking network 98. Bank processor 93 and bank processor 94 are connected each other by a conventional inter-bank network 100 such as well-known Inter-Bank Exchange Network in Japan.

It is not necessary to use the Internet, 97, for connecting EDI server 90 and bank processor 93 or 94 each other in this invention. On the contrary, it is possible to use the Internet, 97, instead of using firm banking networks 98, 99 or inter-bank network 100, in the invention. Actual communications network for communications among the system components is not limited to the Internet, but any other communications networks, such as a dedicated network, a telephone network or a data network, can be used for the purpose.

Any commercially available servers can be used as the hardware of EDI server 90, and the system software including the operations system (OS) can be realized by using a combination of commercially available Windows NT ^{Trade Mark} or other server software. Various kinds of conventional communications protocols, such as Inter-Bank Exchange Protocol, TCP/IP, HTTP and FTP, can be used for system protocols according to networks actually used. Exporter processor 91, Importer processor 92, bank processors 93 and 94, trader processor 95 and logistics company processor 96 can be realized by using a commercially available server or a personal computers, or using any existing computer system.

Figure 3 shows transaction data exchange sequence in the electronic transaction system of the invention. When the importer transmits a purchase order (P/O) to the EDI center through the Internet, the EDI center stores the P/O data and transfers it to the exporter, who is the addressee. The exporter, after receiving the P/O data, sends back a P/O acknowledgement (ACK) to the importer, who is the addressee then. The EDI center, when it receives this P/O acknowledgement, transfer it to the importer, and at the same time it adds the ACK data on the already stored P/O data to store it as the updated data. Logistics information such as pallet information (PAL), container information (CON), advance shipment notice (ASN) or bill of lading (B/L, Way Bill) is also exchanged in the similar way.

Besides above mentioned data exchange, a bill to the importer, which is a kind of paper transaction documents, is issued and transmitted by the exporter, after the invoice (INV) issuance. The importer issues and sends a payment notice (request) to the EDI center or to the importer's bank. The exporter, after receiving the receipt notice, re-associates the bill and the received money (re-association of bill and account receivable). A part of these exchange processes for paper-base transaction data may be carried out using an already-existing firm banking system.

Figure 1 is a block diagram to show functions of EDI center 10 and user side processors 11 and 12 of the invention. EDI center 10 (90) is configured so that it can be connected to processor 11 (91) of the user A as the exporter (creditor) for example, and to processor 12 (92) of the user B as the importer (debtor) for example, through the Internet that is depicted as 13 (97). All of the transaction information are exchanged and transmitted through EDI center 10.

History information files, which are written with a text file format as will be explained later and which correspond to each of transactions, are stored in transaction history database 20 in EDI center 10. History information files that are related to a specific transaction are extracted by using a conventional full text search tool (program), for example, which extracts from a number of files all and only files containing a specified character string.

Transaction information sent from terminal processors 11 and 12 is received by receiver 23 and then sent to ID checker 22, where the ID is checked as will be explained later. If the ID is correct, the transaction information is then forwarded to workflow processor 21. At workflow processor 21, the received transaction data is checked and then transferred with its history updated, by referring to transaction history database 20 and to status transition table database 31, as will be explained in details later. The transaction information to be sent out is transmitted to the addressed user side processor through transmitter 24. Transmitter 24 may have the encryption function such as well-known SSL.

Each of terminal processors 11 and 12 may have the same functions each other. At one of the terminal processors, the transaction information received by receiver 26 is sent to format converter 27, where the transaction data is derived. The derived transaction data is stored in a memory temporarily, and sent to data generator 28. Here, in data generator 28, the received transaction information is displayed through display 30, and also a picture for prompting entrance of new transaction information is displayed, as it is required according to the received transaction information.

Transaction information entered by the user is read by input portion 29 and then combined with the received information from the EDI center to compose the transaction information to be transmitted back to the EDI center. The composed transaction information is led to format converter 27 where the format of the information is converted, and then transmitted by transmitter 25 toward EDI center 10.

Figure 4 depicts a flow chart to show the process contents at EDI center 10 of the invention. This process is triggered at each time when EDI center 10 receives any transaction information. ID, the user identification information, is checked at S10. In other words, the previously registered password is searched by using the ID related to the access from terminals 11 or 12 as the key, and the password that is entered by the user is checked whether it coincides with the previously registered password or not. If it doesn't coincide, the procedure goes to the disconnection process and the connection is cut. This procedure corresponds to the function of ID checker 22 in Fig. 1.

At S11, the received transaction information is checked whether the key information of which coincides with that of previously registered transaction history information in database 20 or not, based on information items which must be included in the transaction information, such as the purchase order number, the item number, the name of the company that places the order and the name of the company that receives the order, If there is the transaction history information of which key information items coincide to those of the received transaction information, that transaction history information is read out from the database.

At S12, the read out transaction history information is collated with the received information to check whether the transaction history information data coincides with the received transaction information data, or not. If it does not, the procedure moves to error process 1, where an error notice that shows the information that is the cause of the error, for example, is sent to the terminal processor that has sent the transaction information. If they coincide, that is, if the result of S12 is OK, then the procedure moves to S13.

At S13, an appropriate state transition table is read out based on the information of the industry where the ordering company or the ordered company belongs. Then, the state transition table is searched based on the present transaction status that is known from the latest version of status information in the read out history information, and also based on the contents of event data which is the additional information in the received transaction information, in order to read out information concerning the correctness of the event data, the process to be executed and the status to be transitioned.

At S14, whether the event data is correct or not is checked. If it is not correct, the procedure moves to error process 2, where an error notice which shows the information that is the cause of the error, for example, is sent to the terminal processor that has sent the transaction information. If the result of S14 is OK, the procedure moves to S15.

At S15, the received transaction information is added to the history information to update it and store the result. At S16, the received transaction information is sent to the addressed terminal processor. Processes S11 to S16 correspond to the function of workflow processor 21 in Fig. 1.

Figure 5 is a flow chart explaining the process contents at the user side processor in the invention. At S20, the format of the received data is converted so that the transaction data can be derived. At S21, the derived transaction information is stored in a memory device such as a hard disk, and is displayed on a screen according to the viewing operation by the user. An area on the screen for entering new transaction information according to the derived transaction information is also displayed automatically, or by manual operation of the user. The user then enters necessary transaction information onto the input area of the displayed screen.

The transaction information that is entered by the user is read at S22, and the information to be transmitted is composed from the entered transaction data and from the received transaction data at S23. The format of the composed transaction data is then converted at S24, so that the data can be transmitted. At S25, the data is transmitted to the EDI center.

Figure 7 is an example of transaction data contents that are transmitted or stored in the invention. Transaction data 40 takes a form of a text data having a record structure where all of the transaction data history can be stored and managed in one record, by using tags which are similar to those used in the conventional page script language, XML. Here, the tag is a specific character string (〈status〉, for example) that is bracketed by specific characters (or delimiters, "〈" and "〉" in the embodiment of the invention) that are not used (or prohibited to use) in character strings that express the transaction. A character string (P/O, for example) bracketed by two tags corresponding each other (〈status〉 and 〈/status〉, for example) is the contents of the transaction data.

The format of the transaction data is divided into two parts, header 41 and contents 42. The header and the contents respectively contain one or plural number of versions, 43 to 45 and 46 to 48. Each version is followed by a series of numbers starting from 1, which corresponds to the order of the new transaction data occurrence. A new version is added at each new stage of the transaction. Since transaction status transition tables are different according to industries, the version number and the transition status are not always correspond one by one.

There are items in each version. Each version inherits contents of items in a version having a smaller version number. If there appear the same items in the later version as in the former version, the item contents of the former version are replaced by those of the later version. When the contents of a transaction data are to be deleted, "delete" is written as the data. Since all transaction data are transferred and stored using this structure, all transaction histories can be managed by using only one record, which leads to smaller redundancy and higher portability of the transaction management, resulting in easier document data generation and management.

The operation of the embodiment of the invention is explained next. Figure 8 is to show an example of display and input for a purchase order data that is generated at the initial step of a transaction. A transaction starts with the generation of a purchase order (P/O) as shown in Fig.3. When the user generates a purchase order, data generator 28 displays a purchase order generation view on the screen according to the direction by the system, and the user enters necessary data into the prescribed position of the screen view (the figure shows the screen view after the data entrance.

Or, the user may read out from EDI center 10 the previous purchase order data for the same commodities of the same seller as default values on the purchase order generation view, and the user may enter the only portion that requires data change. The format of the generated purchase order data is converted at format converter 27 as shown in the following.

Figure 9 is to explain an example of a purchase order data after the format conversion. The purchase order data is then sent to EDI center 10, where the processes shown in Fig.4 are carried out as explained heretofore. The received purchase order data is stored as it is in transaction history database 20, and transferred to the terminal processor of the seller. Processes shown in Fig.5 are carried out at the terminal processor at the seller side as explained heretofore.

Figure 10 explains an example of composing a purchase order acknowledgement data, based on the purchase order data that is received at the seller side terminal processor. The received purchase order data is displayed on the screen and copied as the data to be transmitted. Tags of version 2, a new version, are added just after the tag of version 1. Between these new tags of version 2, items (tags and contents) such as the newly entered acknowledging date (〈ack date〉) and the seller's reference number (〈sellers ref no〉) are inserted, together with the status (〈status〉).

After the format conversion and the additional data composing, the purchase order acknowledgement data is sent to EDI center 10, where procedures already explained by using Fig.4 are carried out. That is, whether the received purchase order acknowledgement data is correct or not, the data is stored in transaction history database 20 and the data is transmitted to the prescribed terminal processor of the seller. The transaction goes on by repeating such procedures described heretofore.

Figure 11 is an example of status transitions at the transaction. The transition pattern differs, according to industries, for example. In the status transition example shown here, there are possibilities for one purchase order (P/O) to induce a plural numbers of P/O acknowledgement (ACK), and also there are possibilities for one purchase order acknowledgement (ACK) to induce a plural numbers of Pallet information. The container information (CON) corresponds to the purchase order acknowledgement (ACK), and the advance shipment notice (ASN) corresponds to the purchase order (P/O). In the figure, A/N means the arrival notice and C/N means the customs clearance notice.

Figure 12 shows an example of the status transition table that is used at the workflow process. This status transition table corresponds to the status transitions shown in Fig. 11. Each column of the table expresses one status, and each line of the table shows an event (document data) occurred. For example, if the present status is P/O (the status where the purchase order is already issued) and the event of P/O ACK occurs now, then the process shown in the box at the cross point of the P/O status column and the P/O ACK event line should be carried out next. That is, version 2 will be divided into several numbers as specified by sub#, and then the process moves to the ACK status.

It becomes possible to apply the invention to any types of transaction, by preparing a status transition table as shown in Fig.12 for the process of S13 in Fig. 4, corresponding to each industry or to each company. Also, in the status transition example of Fig. 11, a series of financial type events such as billing or payment noticing will occur after sending an invoice (INV), in parallel with a series of commodity flow type events. So that a status transition table for processing only such financial type events may be prepared independently.

Figure 6 shows an example of updating the transaction data contents in the invention. When a user wants to update a transaction data, the user can do it by entering a new data with the item to be changed by using tags. For example, when the seller wants to change the delivery date (〈delivery date〉) that is specified in the purchase order (version 1) by the purchaser, the seller only needs to enter the new delivery data information by using the same tag (〈delivery date〉). When there exist two or more same items (tags) in the history information, only the contents of the newest (the last) item (tag) in the version becomes the valid.

Figure 13 shows an example of process division for the transaction. There may be process divisions during the course of the transaction, as shown in Fig. 11. In such a case, a plural number of version items are prepared corresponding to the number of divided transactions, and the items are stored after being attached a series of sub version numbers. Figure 13 shows an example of the history information to be recorded at the EDI center when the ordering process is divided into sub01 and sub02 at the purchase order acknowledgement. In this case, two version 2s, 2.0 and 2.1, are generated, and the contents of sub01 and sub02 are stored in version 2.1 and 2.2, respectively. By employing the recording method explained heretofore, it becomes possible to respond to a different status that may occur at any stage of an actual transaction.

The spirit of this invention is not limited to the embodiment explained heretofore, but can be extended to other variations explained in the following. Although in the explanation of the embodiment, transaction information is converted into the format using tags at the terminal processor and then transmitted, it is only required in this invention that the format of the transaction information that is recorded at EDI center 10 be a format using tags. So that, any format such as the fixed length format can be used for the transmission between the EDI center and terminal processors, if the EDI center contains a format converter to perform the necessary format conversion.

Also, it is not necessary to transmit to each terminal processor all transaction information that is stored in the EDI center. Only the necessary information, that is, the key information and information necessary for generating next transaction information may be enough. Additionally, only key items to specify the transaction and updated or added data are necessary as data to be transmitted from the terminal processor to the EDI center.

Although a pair of a tag that is similar to those used in XML language is used in the embodiment of the invention explained heretofore, the latter tag (the tag that includes "/") could be deleted, if the character string between a tag and the carriage -return code or the following next tag is defined as the information. The order of items between a version tag pair is arbitrary, and the order of version items is also arbitrary.

In the embodiment of the invention described hereinbefore, transaction history database 20 is configured as a hard disc in which a file shown in Fig. 7 is stored in its pre-determined region, and the said region is searched for the full text of the necessary information. But this search process can be much simplified, if intrinsic identification information such as a serial number is generated at each new transaction occurrence and stored as one information item of that transaction, or if it is used as its file name.

In the embodiment of the invention, all of transaction data pass through and are stored at EDI center 10. However, the transaction data generated by a user at the terminal processor can be sent directly to the processor at the other side in parallel with sending it to the EDI center, and the EDI center only checks and stores the received transaction data. The load of the EDI processor can be reduced by this configuration.

Furthermore, The user can send all of the transaction information including the history information to the processor at the other side directly. By using this configuration, the invention can be applied without using an EDI center.

The history information to be recorded may include items of each transaction receipt date (date information for each version). When an error event occurs at some point of the state transition table, the information pertaining to that error event may be recorded by using tags dedicated to error events.

As for workflow functions, every event is triggered by the receipt of a document data in the embodiment of the invention. But a timer function, or the due time management function that triggers an event may be added. For example, when a purchase order acknowledgement should be issued within ten days after the issuance of the purchase order, the timer starts at the time of the purchase order receipt. Ten days after that, if the EDI center has not received the acknowledgement for that purchase order, the center sends a reminder to the seller to issue the acknowledgement.

Although in the embodiment of the invention each terminal processor first receives a document data and then generates and transmits a document data in response to the received document data, each terminal processor may voluntarily search or retrieve the transaction information stored in the EDI center. By using this function, tracing the past history of a transaction and finding the current whereabouts or the status of the car body components, for example, already forwarded can become possible for every related person.

Although transactions between a car body maker and a car component maker are exemplified in the embodiment of the invention, this invention can be applied to transactions between any numbers of companies or persons in any business sectors in any geographical regions.

As explained in detail hereinbefore, this invention is characterized as it contains (1) a generating means to generate transaction information concerning a transaction by using a format which consists of text files wherein each information category can be identified by using a corresponding tag which is composed of an arbitral character string blanketed by specific symbols used as delimiters, (2) a recording means to record said transaction information and (3) an updating means to update the transaction information that is stored in said recording means in accordance with the progress of the transaction.

Accordingly, easy recording and retrieving of transaction history information can be realized by this invention, since new transaction information can be additionally recorded in the text file sequentially as the transaction proceeds. Moreover, as this invention only uses text-base files using tags, there are no limits in length for the data to be recorded, and addition of new items is easy. Also there are no needs to use any dedicated database systems, and easy content retrieval and perusal using conventional general-purpose software such as a word processor or a text editor becomes possible. Furthermore, transaction data can be protected from tampering or missing, because all of the transaction information is managed by the EDI center.

The purpose of the invention is to provide an electronic transaction system that can easily manage history information of transactions.

The electronic transaction system and the electronic transaction method of this invention comprises (1) a means to generate transaction information concerning a transaction by using a format which consists of text files wherein each information category can be identified by using a corresponding tag which is composed of an arbitral character string blanketed by specific symbols used as delimiters, (2) database 20 to record said transaction information and (3) workflow engine 21 to update the transaction information that is stored in said database, in accordance with the progress of the transaction.

## Claims

1. An electronic transaction system where information related to the transaction is exchanged electronically, comprising (1) a generating means to generate transaction information concerning a transaction by using a format which consists of text files wherein each information category can be identified by using a corresponding tag which is composed of an arbitral character string blanketed by specific symbols used as delimiters, (2) a recording means to record said transaction information and (3) an updating means to update the transaction information that is stored in said recording means in accordance with the progress of the transaction.

2. An electronic transaction system as claimed in claim 1 wherein said updating means comprise as it adds new tags to said transaction information in accordance with the progress of stages of said transaction and registers the new information of the transaction together with said new tags in connection with the new information of the transaction.

3. An electronic transaction system as claimed in claim 2 wherein said updating means comprise as it adds at each stage of the transaction new tags indicating that it is a new transaction stage to the end of the preceding stage of said transaction information, and as it inserts the information related to that new stage between said new tags indicating that it is a new transaction stage.

4. An electronic transaction system as claimed in claim 1 wherein said updating means comprise a workflow processing means which produces information on processes to be executed next and on the status to be shifted next corresponding to the newly entered transaction information, based on the business sector information related to the transaction and based on the present transaction status information.

5. An electronic transaction system as claimed in claim 2 wherein said workflow processing means comprise as it executes processes according to the information of processing and status transition that is recorded in the status transition table prepared for each industry category, and as it manages due times and traces commodities status at an arbitrary stage of the transaction.

6. An electronic transaction method in an electronic transaction system where information related to the transaction is exchanged electronically, wherein said electronic transaction method comprises (1) a process to generate transaction information concerning a transaction by using a format which consists of text files wherein each information category can be identified by using a corresponding tag which is composed of an arbitral character string blanketed by specific symbols used as delimiters and to record said transaction information, and (2) a process to update the transaction information by adding a new tag and by entering new transaction information in connection with said new tag, in accordance with the progress of the transaction.
